# EUROPEAN PATENT SPECIFICATION

(11) **EP 4 136 950 B1**
(45) Date of publication and mention of the grant of the patent: **27.03.2024**
(21) Application number: 22190687.8
(22) Date of filing: 17.08.2022
(51) Int. Cl.: A01B 63/112, A01B 79/00

(54) **DRAFT CONTROL ASSEMBLY, DRAFT CONTROL METHOD AND WORK VEHICLE COMPRISING SUCH DRAFT CONTROL ASSEMBLY**
ZUGKRAFTSTEUERUNGSANORDNUNG, ZUGSTEUERUNGSVERFAHREN UND ARBEITSFAHRZEUG MIT SOLCH EINER ZUGSTEUERUNGSANORDNUNG
ENSEMBLE DE RÉGULATION DE TRACTION, PROCÉDÉ DE RÉGULATION DE TRACTION ET VÉHICULE DE TRAVAIL COMPRENANT UN TEL ENSEMBLE DE RÉGULATION DE TRACTION

(30) Priority: 18.08.2021 IT 202100022028
(43) Date of publication of application: 22.02.2023
(73) Proprietor: CNH Industrial Italia S.p.A., 10156 Torino (IT)
(72) Inventor: Iotti, Alessandro, 42123 Reggio Emilia RE (IT); Mantovani, Michele, 46026 Quistello (MN) (IT); Panetta, Giuseppe, 41121 Modena (MO) (IT); Bonilauri, Giovanni Mattia, 41049 Sassuolo (MO) (IT); Tagliazucchi, Alessandro, 41018 San Cesario Sul Panaro (MO) (IT)
(74) Representative: CNH Industrial IP Department

(56) References cited:
- EP-A1- 3 202 243
- EP-A1- 3 205 193
- JP-A- 2010 213 604
- US-A- 6 076 612

## Description

### TECHNICAL FIELD

The present invention concerns a draft control assembly for a work vehicle, a draft control method and a work vehicle comprising such draft control assembly.

### BACKGROUND OF THE INVENTION

Work vehicles such as agricultural vehicles, e.g. tractors, can be coupled to one or more implements, which are adapted to carry out a plurality of work operations.

As is well known, the field performance of work vehicles can be assessed on the basis of a parameter called traction efficiency, which depends on soil mechanical properties and vehicle properties. In detail, traction efficiency is dependent on a draft force exerted by the vehicle, which is the force directed along the direction of travel of the vehicle that is required to pull the implement(s).

The draft force is significantly influenced by the presence of one or more implements, because of their weight and their position with respect to the ground. By way of example, a plow attached to the tractor and adapted to penetrate the soil during operation causes an increase in the draft force, which depends on the depth of plowing.

In general terms, the draft force should be limited within a specific range in order to maximize the traction efficiency of the work vehicle. For this reason, the work vehicles are often provided with draft control assemblies, which are adapted to keep the draft force within the desired range.

In detail, the work vehicles comprise drive means adapted to automatically move the implements with respect to the ground as the work vehicles move in a forward advancement direction and depending on the detected draft force. In further detail, the drive means are adapted to raise the implements in order to reduce the draft force and to lower the implements in order to increase the draft force.

However, the known draft control assemblies are not specifically designed to control the draft force acting on the work vehicles moving in a reverse direction. On the contrary, it has been observed that when the work vehicles move in the reverse direction, the known draft control assemblies cause further drops in the traction efficiency of the work vehicles.

In fact, if the implement is adapted to penetrate the soil and is attached to a rear portion of the work vehicle according to the forward advancement direction and the work vehicle is moving in the reverse direction, the vehicle and the implement are subjected to a progressively increasing pushing force. This increase in the pushing force corresponds to a reduction in the draft force, because the total force that would be required to pull the implement is reduced. As a result of this reduction in the draft force, the known draft control assembly would lower the implements in an attempt to increase the draft force, thus causing an even greater increase in the pushing force. In other words, when the work vehicle is moving in the reverse direction, the known draft control assemblies cause an increase in the tractive effort, which may lead eventually to a stop of the vehicle. Document JP 2010 213 604 A discloses a draft control assembly for a work vehicle.

In view of all the above problems, the need is felt to obtain a draft control assembly adapted to optimize the traction efficiency of the work vehicles moving in the reverse direction.

An aim of the present invention is to satisfy the above mentioned needs in a cost effective and optimized manner.

### SUMMARY OF THE INVENTION

The aforementioned aim is reached by a draft control assembly, a draft control method and by a work vehicle comprising the draft control assembly, as claimed in the appended independent claims.

Preferred embodiments of the invention are realized according to the claims dependent or related to the above independent claims.

### BRIEF DESCRIPTION OF DRAWINGS

For a better understanding of the present invention, a preferred embodiment is described in the following, by way of a non-limiting example, with reference to the attached drawings wherein:
- Figures 1 and 2 are respective lateral views of an agricultural vehicle comprising a draft control assembly according to the present invention and moving respectively in a forward advancement direction and in a reverse direction;
- Figure 3 is a plot of a draft force exerted by the agricultural vehicle of figure 1 as a function of time;
- Figure 4 is a plot of the draft force exerted by the agricultural vehicle of figure 2 as a function of time; and
- Figures 5 and 6 schematically illustrate two alternative embodiments of the agricultural vehicle of figures 1 and 2 with parts removed for clarity.

### DETAILED DESCRIPTION OF THE INVENTION

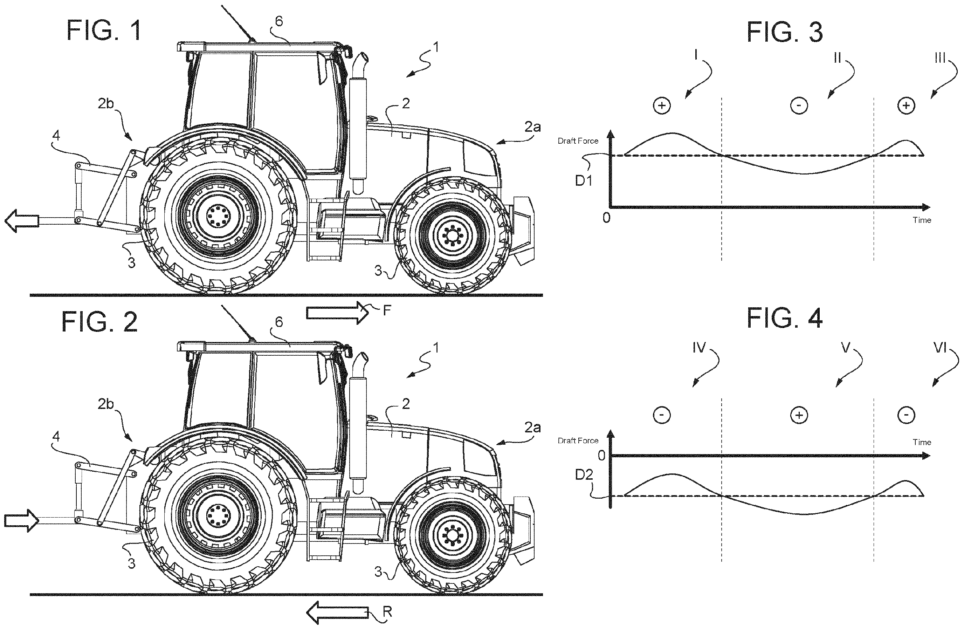

With reference to figure 1, numeral 1 indicates a work vehicle, in particular an agricultural vehicle such as a tractor. Vehicle 1 comprises a main body 2 and a plurality of wheels 3, which are rotatable about respective rotational axes in order to move main body 2 with respect to the ground. Vehicle 1 further comprises a cabin 6, which is adapted to accommodate a driver and possibly one or more passengers.

Vehicle 1 is adapted to move at least in a forward advancement direction F (figure 1) or in a reverse direction R (figure 2). Preferably, the advancement direction F and the reverse direction R are coincident and oriented opposite to one another. In the embodiment shown, advancement direction F is directed to the right in figure 1 and reverse direction R is directed to the left in figure 2.

Main body 2 comprises a front portion 2a and a rear portion 2b according to advancement direction F of vehicle 1. In addition, vehicle 1 may be coupled to one or more not-shown implements, which may be attached to front portion 2a and/or rear portion 2b. In the embodiment shown, vehicle 1 comprises a three-point hitch 4 at rear portion 2b, to which an implement can be attached.

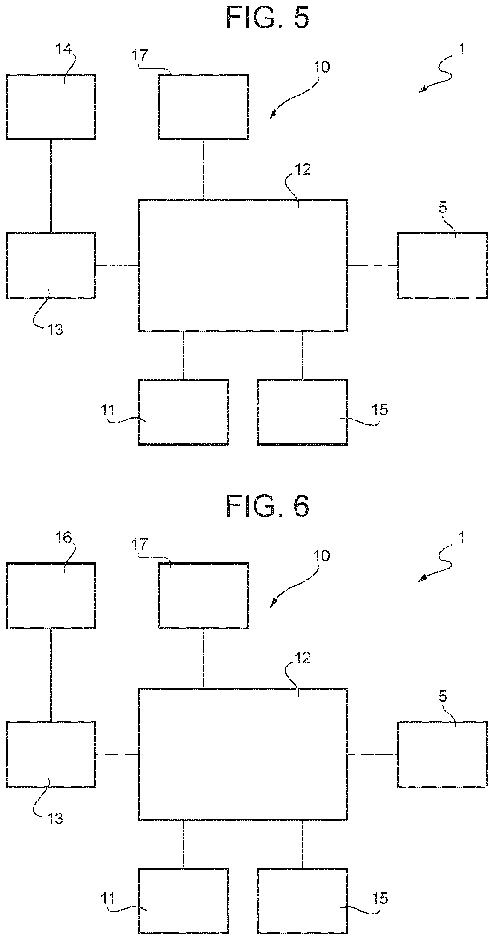

Vehicle 1 further comprises drive means 5 - only schematically shown in figures 5 and 6 - adapted to move the one or more implements with respect to vehicle 1. In detail, drive means 5 are adapted to raise and lower the implement(s) with respect to the ground on which wheels 3 rest.

Drive means 5 are known per se and are not described in detail in the following of the present description. By way of example, drive means 5 comprise pneumatic, hydraulic or electric actuators configured to move the one or more implements and/or the portions of vehicle 1 attached thereto relative to the ground.

Vehicle 1 is adapted to exert a draft force to pull the one or more implements attached thereto. In particular, when vehicle 1 moves along advancement direction F, the draft force should be close to a first threshold value D1 (compare figure 3) .

When the implement is attached to rear portion 2b and vehicle 1 moves along reverse direction R, the vehicle and the implement are subjected to a progressively increasing pushing force, which has opposite sign with respect to the draft force exerted by vehicle 1 moving along advancement direction F. The draft force when vehicle 1 moves along reverse direction R should be close to a second threshold value D2 (compare figure 4), which is lower than first threshold value D1.

Preferably but not necessarily, the absolute values of first and second thresholds D1, D2 are equal to each other, but first and second thresholds D1, D2 have opposite signs.

Vehicle 1 further comprises a draft control assembly 10, which is adapted to control the magnitude of the draft force (figures 5 and 6). Draft control assembly 10 comprises detection means 11, which are adapted to detect the draft force exerted by vehicle 1 and a control unit 12, which is operatively and electrically connected to detection means 11 and connectable to drive means 5.

In particular, detection means 11 measure the draft force over time with a detection frequency that is sufficient to readily detect substantial variations in the magnitude of the draft force. By way of example, detection means 11 comprise one or more load cells.

Advantageously, draft control assembly 10 further comprises selection means 13, which are electrically and operatively connected to control unit 12 and are adapted to select whether vehicle 1 moves in advancement direction F or in reverse direction R. In addition, control unit 12 is programmed to control drive means 5 to raise the implement(s) if the draft force is greater than first threshold value D1 and to lower the implement(s) if the draft force is lower than first threshold value D1 but greater than second threshold value D2, when vehicle 1 moves in advancement direction F. Control unit 12 is further programmed to control drive means 5 to lower the implement(s) if the draft force is greater than second threshold value D2 but lower than first threshold value D1 and to raise the implement(s) if the draft force is lower than second threshold value D2, when vehicle 1 moves in reverse direction R.

In detail, figure 3 is a time diagram of the draft force exerted by vehicle 1, when vehicle 1 moves along advancement direction F. Similarly to figure 3, figure 4 is a plot of the draft force exerted by vehicle 1 as a function of time, when vehicle 1 moves along reverse direction R.

It should be noted that the time trend of the draft force shown in figures 3 and 4 is purely illustrative and that the draft force may have other time trends during operation. In fact, figures 3 and 4 provide an example of the variation in the illustrated time trend of the draft force as a result of the intervention of draft control assembly 10.

In further detail, the plot of figure 3 is divided into three regions I, II, III, which correspond to three consecutive time periods and the plot of figure 4 is divided into three further regions IV, V, VI.

As illustrated in figure 3, in regions I and III the draft force is greater than first threshold value D1, and in region II the draft force is lower than first threshold value D1. Similarly to figure 3, in regions IV and VI of figure 4 the draft force is greater than second threshold value D2 and in region V the draft force is lower than second threshold value D2.

In addition, each of the regions illustrated in figures 3 and 4 are associated with a symbol "+" or "-". In particular, if a region is associated with the symbol "+", the implements are commanded to raise during the time period corresponding to that region; if a region is associated with the symbol "-",the implements are commanded to lower during the time period corresponding to that region.

According to the embodiment shown in figure 6, selection means 13 are manual selection means. In particular, manual selection means 13 may comprise a lever or a button 16, which can be operated by the driver to select the direction of vehicle 1.

Alternatively or in addition, as shown in figure 5, selection means 13 comprise direction detection means 14, which are adapted to automatically detect whether vehicle 1 moves along advancement direction F or reverse direction R. By way of example, direction detection means 14 comprise sensor means adapted to automatically detect the rotational direction of wheels 3. In particular, these sensor means may comprise a rotary encoder.

Draft control assembly 1 may further comprise slippage detection means 15 - only schematically shown in figures 5 and 6 - which are operatively and electrically connected to control unit 12 and adapted to detect a slippage of one or all wheels 3. Preferably, slippage detection means 15 are adapted to detect a difference between the rotational speed of one or more wheels 3 about their respective rotational axes and the speed of vehicle 1. Control unit 12 is programmed to control drive means 5 to raise the implement(s) if the slippage detected by slippage detection means 15 is greater than a slippage threshold.

According to a not-shown embodiment, control unit 12 is programmed to control drive means 5 to raise the implement(s) if the draft force increases over time and to lower the implement(s) if the draft force decreases over time, when work vehicle 1 moves in advancement direction F. In addition, control unit 12 is programmed to control drive means 5 to raise the implement(s) if the draft force increases over time and to lower the implements if the draft force decreases over time, when work vehicle 1 moves in reverse direction R. More specifically, when work vehicle 1 moves in advancement direction F, control unit 12 is programmed to raise or lower the implement(s) via drive means 5 in order to bring the draft force closer to first threshold value D1. Likewise, when work vehicle 1 moves in reverse direction R, control unit 12 is programmed to raise or lower the implement(s) in order to bring the draft force closer to second threshold value D2.

Furthermore, according to the not-shown embodiment, control unit 12 may be programmed to command drive means 5 to raise or lower the implement (s) if the draft force continuously increases or decreases for a time period longer than a time period threshold. Alternatively or in addition, control unit 12 may be programmed to command drive means 5 to raise or lower the implement(s) if the draft force increases and exceeds a specific draft force threshold value or if the draft forces decreases and drops below a further draft force threshold value.

More in detail, when vehicle 1 moves in advancement direction F, control unit 12 may be programmed to control drive means 5 to raise the implement(s) if the draft force is continuously increasing for a time period longer than a first time period threshold and to lower the implement(s) if the draft force is continuously decreasing for a time period longer than a second time period threshold. When work vehicle 1 moves along reverse direction R, control unit 12 may be programmed to control drive means 5 to lower the implement(s) if the draft force is continuously increasing for a time period longer than a third time period threshold and to raise the implement(s) if the draft force is continuously decreasing for a time period longer than a fourth time period threshold. In particular, the first, second, third and fourth time period thresholds may be equal to one another or may differ from one another.

Alternatively or in addition, when vehicle 1 moves in advancement direction F, control unit 12 may be programmed to control drive means 5 to raise the implement(s) if the draft force is increasing and exceeds a third threshold value of the draft force and to lower the implement(s) if the draft force is decreasing and drops below a fourth threshold value of the draft force. When vehicle 1 moves along reverse direction R, control unit 12 may be programmed to control drive means 5 to lower the implement(s) if the draft force is increasing and exceeds a fifth threshold value of the draft force and to raise the implement(s) if the draft force is decreasing and drops below a sixth threshold value of the draft force. In particular, the third, fourth, fifth and sixth thresholds of the draft force may be equal to one another or may differ from one another. In addition, the third, fourth, fifth and sixth thresholds of the draft force may be equal to the first and/or the second threshold values.

Vehicle 1 may also be configured to allow reverse seat driving. In this case, the driver's seat is rotatable about a rotational axis thereof between a first position, in which the seat is adapted to face front portion 2a, and a second position, in which the seat is adapted to face rear portion 2b. Accordingly, when the driver's seat is in the second position and vehicle 1 moves along reverse direction R, the driver can easily watch the road.

Vehicle 1 may further comprise activation means 17, which are electrically and operatively connected to control unit 12 and are adapted to allow draft control assembly 10 to be manually activated. By way of example, activation means 17 comprise a lever or a button arranged in cabin 6 of vehicle 1. Preferably, this lever or button can be reached by the driver sitting in the driver's seat.

The operation of the draft control assembly 10 according to the present invention and described as above is the following. In use, the driver of work vehicle 1 may activate the draft control assembly 10 by means of the lever or button of activation means 17, which is arranged in cabin 6 of vehicle 1. Subsequently, the direction in which vehicle 1 is moving is selected by selection means 13. In particular, the direction may be manually selected by the driver (figure 6), e.g. before engaging the reverse gear, or may be automatically selected as a result of the direction detected by direction detection means 14 (figure 5) . Subsequently or simultaneously, the draft force exerted by vehicle 1 is detected by detection means 11. Preferably, the draft force is measured over time, in order to identify the time trend of the draft force.

According to figure 3, when vehicle 1 moves along advancement direction F, control unit 12 controls drive means 5 to raise the implement (s) if the draft force is greater than first threshold value D1 and to lower the implement(s) if the draft force is lower than first threshold value D1 but greater than second threshold value D2. In particular, as explained by the "+" and "-" signs illustrated in figure 3, control unit 12 controls drive means 5 to raise the implement(s) in regions I and III and to lower the implement(s) in region II.

According to figure 4, when vehicle 1 moves along reverse direction R, control unit 12 controls drive means 5 to lower the implement(s) if the draft force is greater than second threshold value D2 but lower than first threshold value D1 and to raise the implement(s) if the draft force is lower than second threshold value D2. In particular, as explained by the "+" and "-" signs illustrated in figure 4, control unit 12 controls drive means 5 to raise the implement(s) in region V and to lower the implement(s) in regions IV and VI.

More specifically, the value of the draft force corresponding to region IV is greater than second threshold value D2 but lower than first threshold D1. Accordingly, control unit 12 controls drive means 5 to lower the implement(s) with respect to the ground, so that vehicle 1 exerts a draft force closer to second threshold value D2. As a result, the pushing force acting on vehicle 1 and the implement(s) increases and the draft force decreases. In particular, if the draft force falls below second threshold value D2 - as in region V of figure 4 - control unit 12 controls drive means 5 to lift the implement(s) with respect to the ground. In this way, the implement (s) are arranged further away from the ground, or are placed at a lesser depth in the ground and offer less resistance to the movement of the vehicle. Therefore the pushing force decreases and the draft force approaches the second threshold value again.

According to the not-shown embodiment, when vehicle 1 moves along advancement direction F, control unit 12 controls drive means 5 to raise the implement(s) if the draft force is increasing and to lower the implement(s) if the draft force is decreasing. In addition, according to the not-shown embodiment, when vehicle 1 moves along reverse direction R, control unit 12 controls drive means 5 to lower the implement(s) if the draft force is increasing and to raise the implement(s) if the draft force is decreasing.

In view of the foregoing, the advantages of draft control assembly 10, work vehicle 1 and the draft control method according to the invention are apparent.

In particular, since draft control assembly 10 comprises selection means 13 adapted to select the direction along which vehicle 1 moves, the traction efficiency of vehicle 1 is optimized. In fact, draft control assembly 10 is specifically designed to vary the draft force depending on the fact that vehicle 1 is moving along advancement direction F or reverse direction R.

In addition, when work vehicle 1 moves in reverse direction R the implements are lowered if the draft force is greater than second threshold value D2 but lower than first threshold value D1 and raised if the draft force is lower than second threshold value D2. This prevents the pushing force acting on vehicle 1 moving along reverse direction R and the implement(s) from stopping vehicle 1. The same applies if the implements are lowered when the draft force increases and raised when the draft force decreases when vehicle 1 moves in reverse direction R.

Since the selection means 13 are manual selection means or comprise direction detection means 14, the direction along which vehicle 1 moves can be manually or automatically selected.

Furthermore, since draft control assembly 10 comprises slippage detection means 15, the slippage of wheels 3 can be prevented both when vehicle 1 is moving along advancement direction F or reverse direction R. This may be particularly advantageous in snow plowing applications.

Moreover, since vehicle 1 may also be configured to allow reverse seat driving, the maneuverability of vehicle 1 and the implement(s) is further improved.

It is clear that modifications can be made to the described draft control assembly 10, work vehicle 1 and the draft control method which do not extend beyond the scope of protection defined by the claims.

## Claims

1. Draft control assembly for a work vehicle (1); said work vehicle (1) being adapted to move, in use, with respect to the ground in at least an advancement direction (F) and a reverse direction (R) and to be coupled to one or more implements; said work vehicle (1) comprising drive means (5) adapted to raise and lower said implements coupled to the work vehicle (1) with respect to the ground;
said draft control assembly (10) comprising:
- selection means (13) adapted to select whether said work vehicle (1) moves, in use, in said advancement direction (F) or in said reverse direction (R);
- detection means (11) adapted to detect a draft force exerted, in use, by said work vehicle (1); and
- a control unit (12) operatively and electrically connected to said selection means (13) and said detection means (11) and connectable to said drive means (5);
**characterized in that**
when said work vehicle (1) moves, in use, in said advancement direction (F), said control unit (12) is programmed to control said drive means (5) to raise said implements if said draft force is greater than a first threshold value (D1) and to lower said implements if said draft force is lower than said first threshold value (D1) but greater than a second threshold value (D2);
wherein, when said work vehicle (1) moves, in use, in said reverse direction, said control unit (12) is programmed to control said drive means (5) to lower said implements if said draft force is greater than said second threshold value (D2) but lower than said first threshold value (D1) and to raise said implements if said draft force is lower than said second threshold value (D2); said second threshold value (D2) being lower than said first threshold value (D1).

2. Draft control assembly for a work vehicle (1); said work vehicle (1) being adapted to move, in use, with respect to the ground in at least an advancement direction (F) and a reverse direction (R) and to be coupled to one or more implements; said work vehicle (1) comprising drive means (5) adapted to raise and lower said implements coupled to the work vehicle (1) with respect to the ground;
said draft control assembly (10) comprising:
- selection means (13) adapted to select whether said work vehicle (1) moves, in use, in said advancement direction (F) or in said reverse direction (R);
- detection means (11) adapted to detect a draft force exerted, in use, by said work vehicle (1); and
- a control unit (12) operatively and electrically connected to said selection means (13) and said detection means (11) and connectable to said drive means (5);
**characterized in that**
when said work vehicle (1) moves, in use, in said advancement direction (F), said control unit (12) is programmed to control said drive means (5) to raise said implements if said draft force increases, in use, and to lower said implements if said draft force decreases, in use;
wherein, when said work vehicle (1) moves, in use, in said reverse direction, said control unit (12) is programmed to control said drive means (5) to lower said implements if said draft force increases, in use, and to raise said implements if said draft force decreases, in use.

3. Draft control assembly according to claim 1 or 2, wherein said selection means (13) are manual selection means.

4. Draft control assembly according to any one of the foregoing claims, wherein said selection means (13) comprise direction detection means (14) adapted to detect whether said work vehicle (1) moves, in use, in said advancement direction (F) or in said reverse direction (R).

5. Draft control assembly according to any one of the foregoing claims, further comprising slippage detection means (15), which are operatively and electrically connected to said control unit (12) and adapted to detect, in use, a slippage of one or all wheels (3) of said vehicle (1).

6. Draft control assembly according to claim 2 or any one of claims 3 to 5 when depending on claim 2, wherein when said work vehicle (1) moves, in use, in said advancement direction (F), said control unit (12) is programmed to control said drive means (5) to raise said implements if said draft force continuously increases, in use, for a time period longer than a first time period threshold and to lower said implements if said draft force continuously decreases, in use, for a time period longer than a second time period threshold; and
wherein when said work vehicle (1) moves, in use, in said reverse direction (R), said control unit (12) is programmed to control said drive means (5) to lower said implements if said draft force is continuously increasing, in use, for a time period longer than a third time period threshold and to raise said implements if said draft force is continuously decreasing, in use, for a time period longer than a fourth time period threshold.

7. Draft control assembly according to claim 2 or any one of claims 3 to 5 when depending on claim 2 or claim 6, wherein when said work vehicle (1) moves, in use, in said advancement direction (F), said control unit (12) is programmed to control said drive means (5) to raise said implements if said draft force increases, in use, and exceeds, in use, a third threshold value of said draft force and to lower said implements if said draft force decreases, in use, and drops below a fourth threshold value of said draft force; and
wherein when said work vehicle (1) moves, in use, in said reverse direction (R), said control unit (12) is programmed to control said drive means (5) to lower said implements if said draft force increases, in use, and exceeds, in use, a fifth threshold value of said draft force and to raise said implements if said draft force decreases, in use, and drops below, in use, a sixth threshold value of said draft force.

8. A work vehicle, which is adapted to be coupled to one or more implements; said work vehicle (1) comprising:
- a main body (2);
- a plurality of wheels (3), which are adapted to move said main body (2) with respect to the ground along an advancement direction (F) or a reverse direction (A);
- drive means (5) adapted to raise and lower said implements coupled to said work vehicle (1) with respect to the ground; and
- a draft control assembly (10) according to any one of the foregoing claims, which is electrically and operatively connected to said drive means (5).

9. Draft control method for a work vehicle (1); said work vehicle (1) being adapted to be coupled to one or more implements and comprising drive means (5) adapted to raise and lower said implements with respect to the ground; said method comprising the steps of:
i) selecting whether said work vehicle (1) is moving in an advancement direction (F) or a reverse direction (R) by means of selection means (13) of said work vehicle (1);
ii) detecting a draft force exerted by said work vehicle (1) by means of detection means (11) of said work vehicle (1);
iii) controlling by means of a control unit (12) of said work vehicle (1) said drive means (5) to raise said implements if said draft force detected at step ii) is greater than a first threshold value (D1) and to lower said implements if said draft force is lower than said first threshold value (D1) but greater than a second threshold value (D2) when said work vehicle (1) moves along said advancement direction (F);
iv) controlling by means of said control unit (12) said drive means (5) to lower said implements if said draft force detected at step ii) is greater than said second threshold value (D2) but lower than said first threshold value (D1) and to raise said implements if said draft force is lower than said second threshold value (D2) when said work vehicle (1) moves along said reverse direction (R); said second threshold value (D2) being lower than said first threshold value (D1).

10. Draft control method for a work vehicle (1); said work vehicle (1) being adapted to be coupled to one or more implements and comprising drive means (5) adapted to raise and lower said implements with respect to the ground; said method comprising the steps of:
v) selecting whether said work vehicle (1) is moving in an advancement direction (F) or a reverse direction (R) by means of selection means (13) of said work vehicle (1);
vi) detecting a draft force exerted by said work vehicle (1) by means of detection means (11) of said work vehicle (1);
vii) controlling by means of a control unit (12) of said work vehicle (1) said drive means (5) to raise said implements if said draft force detected at step vi) increases and to lower said implements if said draft force decreases when said work vehicle (1) moves along advancement direction (F);
viii) controlling by means of a control unit (12) of said work vehicle (1) said drive means (5) to raise said implements if said draft force detected at step vi) decreases and to lower said implements if said draft force increases when said work vehicle (1) moves along reverse direction (R).

11. Draft control method according to claim 9 or 10, wherein said step ii) or said step v) comprises the step of ix) manually selecting whether said work vehicle (1) is moving in said advancement direction (F) or in said reverse direction (R) by means of said selection means (13).

12. Draft control method according to any one of claims 9 to 11, wherein said step ii) or said step v) comprises the step of x) detecting whether said work vehicle (1) is moving in said advancement direction (F) or in said reverse direction (R) by means of direction detection means (14) of said selection means (13).

13. Draft control method according to any one of claims 9 to 12, comprising the further steps of xi) detecting a slippage of one or all wheels (3) of said work vehicle (1) by means of slippage detection means (15) of said work vehicle (1) ;
xii) controlling by means of a control unit (12) of said work vehicle (1) said drive means (5) to raise said implements if the slippage detected at step xi) is greater than a slippage threshold.

14. Draft control method according to claim 10 or any one of claims 11 to 13 when depending on claim 10, wherein said step vii) comprises the step of xiii) controlling by means of said control unit (12) said drive means (5) to raise said implements if said draft force continuously increases for a time period longer than a first time period threshold and to lower said implements if said draft force continuously decreases for a time period longer than a second time period threshold; and
wherein said step viii) comprises the step of xiv) controlling by means of said control unit (12) said drive means (5) to lower said implements if said draft force continuously increases for a time period longer than a third time period threshold and to raise said implements if said draft force continuously decreases, in use, for a time period longer than a fourth time period threshold.

15. Draft control method according to claim 10, any one of claims 11 to 13 when depending on claim 10 or claim 14, wherein said step vii) comprises the step of xv) controlling by means of said control unit (12) said drive means (5) to raise said implements if said draft force increases and exceeds a third threshold value of said draft force and to lower said implements if said draft force decreases, in use, and drops below a fourth threshold value of said draft force; and
wherein said step viii) comprises the step of xvi) controlling by means of said control unit (12) said drive means (5) to lower said implements if said draft force increases and exceeds a fifth threshold value of said draft force and to raise said implements if said draft force decreases and drops below a sixth threshold value of said draft force.

## Patentansprüche

1. Zugkraftsteuerungsanordnung für ein Arbeitsfahrzeug (1); wobei das Arbeitsfahrzeug (1) dazu ausgebildet ist, sich bei dessen Nutzung in Bezug zum Boden mindestens in einer Vorwärtsrichtung (F) und in einer Rückwärtsrichtung (R) zu bewegen und mit einem oder mehreren Arbeitsgeräten gekoppelt zu sein; wobei das Arbeitsfahrzeug (1) Antriebsmittel (5) aufweist, die dazu ausgebildet sind, die mit dem Arbeitsfahrzeug (1) gekoppelten Arbeitsgeräte in Bezug zum Boden anzuheben und abzusenken;
wobei die Zugkraftsteuerungsanordnung (10) aufweist:
- eine Auswahleinrichtung (13), die dazu ausgebildet ist, auszuwählen, ob das Arbeitsfahrzeug (1) sich bei dessen Nutzung in Vorwärtsrichtung (F) oder in Rückwärtsrichtung (R) bewegt;
- eine Erfassungseinrichtung (11), die dazu ausgebildet ist, eine bei der Nutzung des Arbeitsfahrzeugs (1) ausgeübte Zugkraft zu erfassen; und
- eine Steuereinheit (12), die wirkend und elektrisch mit der Auswahleinrichtung (13) und der Erfassungseinrichtung (11) verbunden ist und die mit den Antriebsmitteln (5) verbindbar ist;
**dadurch gekennzeichnet, dass**
wenn das Arbeitsfahrzeug (1) sich bei dessen Nutzung in Vorwärtsrichtung (F) bewegt, die Steuereinheit (12) dazu programmiert ist, die Antriebsmittel (5) zu steuern, um die Arbeitsgeräte anzuheben, wenn die Zugkraft größer als ein erster Grenzwert (D1) ist, und die Arbeitsgeräte abzusenken, wenn die Zugkraft kleiner als der erste Grenzwert (D1), aber größer als ein zweiter Grenzwert (D2) ist;
wobei, wenn das Arbeitsfahrzeug (1) sich bei dessen Nutzung in Rückwärtsrichtung bewegt, die Steuereinheit (12) dazu programmiert ist, die Antriebsmittel (5) zu steuern, um die Arbeitsgeräte abzusenken, wenn die Zugkraft größer als der zweite Grenzwert (D2), aber kleiner als der erste Grenzwert (D1) ist, und um die Arbeitsgeräte anzuheben, wenn die Zugkraft kleiner als der zweite Grenzwert (D2) ist, wobei der zweite Grenzwert (D2) kleiner als erste Grenzwert (D1) ist.

2. Zugkraftsteuerungsanordnung für ein Arbeitsfahrzeug (1), wobei das Arbeitsfahrzeug (1) dazu ausgebildet ist, sich bei dessen Nutzung in Bezug zum Boden mindestens in einer Vorwärtsrichtung (F) und in einer Rückwärtsrichtung (R) zu bewegen und dazu ausgebildet ist, mit einem oder mehreren Arbeitsgeräten gekoppelt zu sein; wobei das Arbeitsfahrzeug (1) Antriebsmittel (5) aufweist, die dazu ausgebildet sind, die mit dem Arbeitsfahrzeug (1) gekoppelten Arbeitsgeräte in Bezug zum Boden anzuheben und abzusenken;
wobei die Zugkraftsteuerungsanordnung (10) aufweist:
- eine Auswahleinrichtung (13), die dazu ausgebildet ist, auszuwählen, ob das Arbeitsfahrzeug (1) sich bei dessen Nutzung in Vorwärtsrichtung (F) oder in Rückwärtsrichtung (R) bewegt;
- eine Erfassungseinrichtung (11), die dazu ausgebildet ist, eine bei der Nutzung des Arbeitsfahrzeugs (1) ausgeübte Zugkraft zu erfassen; und
- eine Steuereinheit (12), die wirkend und elektrisch mit der Auswahleinrichtung (13) und der Erfassungseinrichtung (11) verbunden ist und die mit den Antriebsmitteln (5) verbindbar ist;
**dadurch gekennzeichnet, dass**
wenn das Arbeitsfahrzeug (1) sich bei dessen Nutzung in Vorwärtsrichtung (F) bewegt, die Steuereinheit (12) dazu programmiert ist, die Antriebsmittel (5) zu steuern, um die Arbeitsgeräte anzuheben, wenn die Zugkraft während der Nutzung zunimmt, und um die Arbeitsgeräte abzusenken, wenn die Zugkraft während der Nutzung abnimmt;
wobei, wenn das Arbeitsfahrzeug (1) sich bei dessen Nutzung in Rückwärtsrichtung bewegt, die Steuereinheit (12) dazu programmiert ist, die Antriebsmittel (5) zu steuern, um die Arbeitsgeräte abzusenken, wenn die Zugkraft während der Nutzung zunimmt, und um die Arbeitsgeräte anzuheben, wenn die Zugkraft während der Nutzung abnimmt.

3. Zugkraftsteuerungsanordnung nach Anspruch 1 oder 2, wobei die Auswahleinrichtung (13) eine manuelle Auswahleinrichtung ist.

4. Zugkraftsteuerungsanordnung nach einem der vorhergehenden Ansprüche, wobei die Auswahleinrichtung (13) eine Richtungserfassungseinrichtung (14) aufweist, die dazu ausgebildet ist, zu erfassen, ob das Arbeitsfahrzeug (1) sich bei dessen Nutzung in Vorwärtsrichtung (F) oder in Rückwärtsrichtung (R) bewegt.

5. Zugkraftsteuerungsanordnung nach einem der vorhergehenden Ansprüche, die des Weiteren ein Schlupferfassungseinrichtung (15) aufweist, die wirkend und elektrisch mit der Steuereinheit (12) verbunden und dazu ausgebildet ist, während der Nutzung ein Schlupfen von einem oder von allen Rädern (3) des Arbeitsfahrzeugs (1) zu erfassen.

6. Zugkraftsteuerungsanordnung nach Anspruch 2 oder einem der Ansprüche 3 bis 5, wenn abhängig von Anspruch 2, wobei, wenn das Arbeitsfahrzeug (1) sich bei dessen Nutzung in Vorwärtsrichtung (F) bewegt, die Steuereinheit (12) dazu programmiert ist, die Antriebsmittel (5) zu steuern, um die Arbeitsgeräte anzuheben, wenn die Zugkraft während der Nutzung über eine Zeitdauer, die länger als ein erster Zeitdauergrenzwert ist, kontinuierlich zunimmt, und um die Arbeitsgeräte abzusenken, wenn die Zugkraft während der Nutzung über eine Zeitdauer, die länger als ein zweiter Zeitdauergrenzwert ist, kontinuierlich abnimmt; und
wobei, wenn das Arbeitsfahrzeug (1) sich bei dessen Nutzung in Rückwärtsrichtung (R) bewegt, die Steuereinheit (12) dazu programmiert ist, die Antriebsmittel (5) zu steuern, um die Arbeitsgeräte abzusenken, wenn die Zugkraft während der Nutzung über eine Zeitdauer, die länger als ein dritter Zeitdauergrenzwert ist, kontinuierlich zunimmt, und um die Arbeitsgeräte anzuheben, wenn die Zugkraft während der Nutzung über eine Zeitdauer, die länger als ein vierter Zeitdauergrenzwert ist, kontinuierlich abnimmt.

7. Zugkraftsteuerungsanordnung nach Anspruch 2 oder einem der Ansprüche 3 bis 5, wenn abhängig von Anspruch 2 oder Anspruch 6, wobei, wenn das Arbeitsfahrzeug (1) sich bei dessen Nutzung in Vorwärtsrichtung (F) bewegt, die Steuereinheit (12) dazu programmiert ist, die Antriebsmittel (5) zu steuern, um die Arbeitsgeräte anzuheben, wenn die Zugkraft während der Nutzung zunimmt und während der Nutzung einen dritten Zugkraftgrenzwert überschreitet, und um die Arbeitsgeräte abzusenken, wenn die Zugkraft während der Nutzung abnimmt und einen vierten Zugkraftgrenzwert unterschreitet; und
wobei, wenn das Arbeitsfahrzeug (1) sich bei dessen Nutzung in Rückwärtsrichtung (R) bewegt, die Steuereinheit (12) dazu programmiert ist, die Antriebsmittel (5) zu steuern, um die Arbeitsgeräte abzusenken, wenn die Zugkraft während der Nutzung zunimmt und während der Nutzung einen fünften Zugkraftgrenzwert überschreitet, und um die Arbeitsgeräte anzuheben, wenn die Zugkraft während der Nutzung abnimmt und während der Nutzung einen sechsten Zugkraftgrenzwert unterschreitet.

8. Arbeitsfahrzeug, das dazu ausgebildet ist, mit einem oder mehreren Arbeitsgeräten gekoppelt zu werden; wobei das Arbeitsfahrzeug (1) aufweist:
- ein Fahrgestell (2);
- eine Mehrzahl an Rädern (3), die dazu ausgebildet sind, das Fahrgestell (2) im Bezug zum Boden entlang einer Vorwärtsrichtung (F) oder einer Rückwärtsrichtung (R) zu bewegen;
- Antriebsmittel (5), die dazu ausgebildet sind, die Arbeitsgeräte, die mit dem Arbeitsfahrzeug (1) gekoppelt sind, im Bezug zum Boden anzuheben und abzusenken; und
- eine Zugkraftsteuerungsanordnung (10) nach einem der vorhergehenden Ansprüche, die elektrisch wirkend mit den Antriebsmitteln (5) verbunden ist.

9. Zugkraftsteuerungsverfahren für ein Arbeitsfahrzeug (1); wobei das Arbeitsfahrzeug (1) dazu ausgebildet ist, mit einem oder mehreren Arbeitsgeräten gekoppelt zu werden und das Antriebsmittel (5) aufweist, die dazu ausgebildet sind, die Arbeitsgeräte in Bezug zum Boden anzuheben oder abzusenken; wobei das Verfahren die folgenden Schritte aufweist:
i) Auswählen mittels einer Auswahleinrichtung (13) des Arbeitsfahrzeugs (1), ob das Arbeitsfahrzeug (1) sich in Vorwärtsrichtung (F) oder in Rückwärtsrichtung (R) bewegt;
ii) Erfassen mittels einer Erfassungseinrichtung (11) des Arbeitsfahrzeugs (1) einer von dem Arbeitsfahrzeug (1) ausgeübten Zugkraft;
iii) Steuern mittels einer Steuereinheit (12) des Arbeitsfahrzeugs (1) der Antriebsmittel (5), um die Arbeitsgeräte anzuheben, wenn die in Schritt ii) erfasste Zugkraft, größer als ein erster Grenzwert (D1) ist, und um die Arbeitsgeräte abzusenken, wenn die Zugkraft kleiner als der erste Grenzwert (D1), aber größer als ein zweiter Grenzwert (D2) ist, wenn das Arbeitsfahrzeug (1) sich entlang der Vorwärtsrichtung (F) bewegt;
iv) Steuern mittels der Steuereinheit (12) des Arbeitsfahrzeugs (1) des Antriebsmittels (5), um die Arbeitsgeräte abzusenken, wenn die in Schritt ii) erfasste Zugkraft größer als der zweite Grenzwert (D2), aber kleiner als der erste Grenzwert (D1) ist, und um die Arbeitsgeräte anzuheben, wenn die Zugkraft kleiner als der zweite Grenzwert (D2) ist, wenn das Arbeitsfahrzeug (1) sich entlang der Rückwärtsrichtung (R) bewegt; wobei der zweite Grenzwert (D2) kleiner als der erste Grenzwert (D1) ist.

10. Zugkraftsteuerungsverfahren für ein Arbeitsfahrzeug (1); wobei das Arbeitsfahrzeug (1) dazu ausgebildet ist, mit einem oder mehreren Arbeitsgeräten gekoppelt zu werden und das Antriebsmittel (5) aufweist, die dazu ausgebildet sind, Arbeitsgeräte in Bezug zum Boden anzuheben oder abzusenken; wobei das Verfahren die folgenden Schritte aufweist:
v) Auswählen mittels einer Auswahleinrichtung (13) des Arbeitsfahrzeugs (1), ob das Arbeitsfahrzeug (1) sich in Vorwärtsrichtung (F) oder in Rückwärtsrichtung (R) bewegt;
vi) Erfassen mittels einer Erfassungseinrichtung (11) des Arbeitsfahrzeugs (1) einer von dem Arbeitsfahrzeug (1) ausgeübten Zugkraft;
vii) Steuern mittels einer Steuereinheit (12) des Arbeitsfahrzeugs (1) der Antriebsmittel (5), um die Arbeitsgeräte anzuheben, wenn die in Schritt vi) erfasste Zugkraft zunimmt, und um die Arbeitsgeräte abzusenken, wenn die Zugkraft abnimmt, wenn das Arbeitsfahrzeug (1) sich entlang der Vorwärtsrichtung (F) bewegt;
viii) Steuern mittels einer Steuereinheit (12) des Arbeitsfahrzeugs (1) der Antriebsmittel (5), um die Arbeitsgeräte anzuheben, wenn die in Schritt vi) erfasste Zugkraft abnimmt, und um die Arbeitsgeräte abzusenken, wenn die Zugkraft zunimmt, wenn das Arbeitsfahrzeug (1) sich entlang der Rückwärtsrichtung (R) bewegt.

11. Zugkraftsteuerungsverfahren nach Anspruch 9 oder 10, wobei der Schritt ii) oder der Schritt v) den nachfolgenden Schritt aufweist: ix) manuelles Auswählen mittels der Auswahleinrichtung (13), ob das Arbeitsfahrzeug (1) sich in Vorwärtsrichtung (F) oder in Rückwärtsrichtung (R) bewegt.

12. Zugkraftsteuerungsverfahren nach einem der Ansprüche 9 bis 11, wobei der Schritt ii) oder der Schritt v) den nachfolgenden Schritt aufweist: x) Erfassen mittels der Richtungserfassungseinrichtung (14) der Auswahleinrichtung (13), ob das Arbeitsfahrzeug (1) sich in Vorwärtsrichtung (F) oder in Rückwärtsrichtung (R) bewegt.

13. Zugkraftsteuerungsverfahren nach einem der Ansprüche 9 bis 12, das des Weiteren den folgenden Schritt aufweist: xi) Erfassen mittels Schlupferfassungseinrichtung (15) des Arbeitsfahrzeugs (1) eines Schlupfs von einem oder von allen Räder (3) des Arbeitsfahrzeugs (1);
xii) Steuern mittels einer Steuereinheit (12) des Arbeitsfahrzeugs (1) der Antriebsmittel (5), um die Arbeitsgeräte anzuheben, wenn der in Schritt xi) erfasste Schlupf größer als ein Schlupfgrenzwert ist.

14. Zugkraftsteuerungsverfahren nach Anspruch 10 oder einem der Ansprüche 11 bis 13, wenn abhängig von Anspruch 10, wobei der Schritt vii) den nachfolgenden Schritt aufweist: xiii) Steuern mittels der Steuereinheit (12) der Antriebsmittel (5), um die Arbeitsgeräte anzuheben, wenn die Zugkraft über eine Zeitdauer, die länger als ein erster Zeitdauergrenzwert ist, kontinuierlich zunimmt, und um die Arbeitsgeräte abzusenken, wenn die Zugkraft über eine Zeitdauer, die länger als ein zweiter Zeitdauergrenzwert ist, kontinuierlich abnimmt; und
wobei der Schritt viii) den nachfolgenden Schritt aufweist: xiv) Steuern mittels der Steuereinheit (12) der Antriebsmittel (5), um die Arbeitsgeräte abzusenken, wenn die Zugkraft über eine Zeitdauer, die länger als ein dritter Zeitdauergrenzwert ist, kontinuierlich zunimmt, und um die Arbeitsgeräte anzuheben, wenn die Zugkraft während der Nutzung über eine Zeitdauer, die länger als ein vierter Zeitdauergrenzwert ist, kontinuierlich abnimmt.

15. Zugkraftsteuerungsverfahren nach Anspruch 10, einen der Ansprüche 11 bis 13, wenn abhängig von Anspruch 10 oder Anspruch 14, wobei der Schritt vii) den nachfolgenden Schritt aufweist: xv) Steuern mittels der Steuereinheit (12) der Antriebsmittel (5), um die Arbeitsgeräte anzuheben, wenn die Zugkraft zunimmt und einen dritten Zugkraftgrenzwert überschreitet, und um die Arbeitsgeräte abzusenken, wenn die Zugkraft während der Nutzung unter einen vierten Zugkraftgrenzwert fällt; und
wobei der Schritt viii) den nachfolgenden Schritt aufweist: xvi) Steuern mittels der Steuereinheit (12) der Antriebsmittel (5), um die Arbeitsgeräte abzusenken, wenn die Zugkraft zunimmt und einen fünften Zugkraftgrenzwert überschreitet, und um die Arbeitsgeräte anzuheben, wenn die Zugkraft abnimmt und unter einen sechsten Zugkraftgrenzwert fällt.

## Revendications

1. Ensemble de régulation de traction pour véhicule de travail (1) ; ledit véhicule de travail (1) étant adapté pour se déplacer, en fonctionnement, par rapport au sol dans au moins une direction d'avancement (F) et une direction inverse (R), et pour être couplé à un ou plusieurs outils ; ledit véhicule de travail (1) comprenant des moyens d'entraînement (5) adaptés pour lever et abaisser lesdits outils couplés au véhicule de travail (1) par rapport au sol ;
ledit ensemble de régulation de traction (10) comprenant :
- des moyens de sélection (13) adaptés pour sélectionner si ledit véhicule de travail (1) se déplace, en fonctionnement, dans ladite direction d'avancement (F) ou dans ladite direction inverse (R) ;
- des moyens de détection (11) adaptés pour détecter une force de traction exercée, en fonctionnement, par ledit véhicule de travail (1) ; et
- une unité de commande (12) connectée de manière fonctionnelle et électrique auxdits moyens de sélection (13) et auxdits moyens de détection (11) et pouvant être connectée auxdits moyens d'entraînement (5) ;
[caractérisé en ce que]
lorsque ledit véhicule de travail (1) se déplace, en fonctionnement, dans ladite direction d'avancement (F), ladite unité de commande (12) est programmée pour contrôler lesdits moyens d'entraînement (5) afin de relever lesdits outils si ladite force de traction est supérieure à une première valeur seuil (DI) et d'abaisser lesdits outils si ladite force de traction est inférieure à ladite première valeur seuil (DI), mais supérieure à une deuxième valeur seuil (D2) ;
dans lequel, lorsque ledit véhicule de travail (1) se déplace, en fonctionnement, dans ladite direction inverse, ladite unité de commande (12) est programmée pour contrôler lesdits moyens d'entraînement (5) afin d'abaisser lesdits outils si ladite force de traction est supérieure à ladite deuxième valeur seuil (D2) mais inférieure à ladite première valeur seuil (DI) et de relever lesdits outils si ladite force de traction est inférieure à ladite deuxième valeur seuil (D2) ; ladite deuxième valeur seuil (D2) étant inférieure à ladite première valeur seuil (DI).

2. Ensemble de régulation de traction pour véhicule de travail (1) ; ledit véhicule de travail (1) étant adapté pour se déplacer, en fonctionnement, par rapport au sol dans au moins une direction d'avancement (F) et une direction inverse (R), et pour être couplé à un ou plusieurs outils ; ledit véhicule de travail (1) comprenant des moyens d'entraînement (5) adaptés pour lever et abaisser lesdits outils couplés au véhicule de travail (1) par rapport au sol ;
ledit ensemble de régulation de traction (10) comprenant :
- des moyens de sélection (13) adaptés pour sélectionner si ledit véhicule de travail (1) se déplace, en fonctionnement, dans ladite direction d'avancement (F) ou dans ladite direction inverse (R) ;
- des moyens de détection (11) adaptés pour détecter une force de traction exercée, en fonctionnement, par ledit véhicule de travail (1) ; et
- une unité de commande (12) connectée de manière fonctionnelle et électrique auxdits moyens de sélection (13) et auxdits moyens de détection (11) et pouvant être connectée auxdits moyens d'entraînement (5) ;
[ **caractérisé en ce que** ]
lorsque ledit véhicule de travail (1) se déplace, en fonctionnement, dans ladite direction d'avancement (F), ladite unité de commande (12) est programmée pour contrôler lesdits moyens d'entraînement (5) afin de relever lesdits outils si ladite force de traction augmente, en fonctionnement, et d'abaisser lesdits outils si ladite force de traction décroît, en fonctionnement ;
dans lequel, lorsque ledit véhicule de travail (1) se déplace, en fonctionnement, dans ladite direction inverse (F), ladite unité de commande (12) est programmée pour contrôler lesdits moyens d'entraînement (5) afin d'abaisser lesdits outils si ladite force de traction augmente, en fonctionnement, et de relever lesdits outils si ladite force de traction décroît, en fonctionnement.

3. Ensemble de régulation de traction selon la Revendication 1 ou la Revendication 2, dans lequel lesdits moyens de sélection (13) sont des moyens de sélection manuelle.

4. Ensemble de régulation de traction selon l'une quelconque des revendications précédentes, dans lequel lesdits moyens de sélection (13) comprennent des moyens de détection de direction (14) adaptés pour détecter si ledit véhicule de travail (1) se déplace, en fonctionnement, dans ladite direction d'avancement (F) ou dans ladite direction inverse (R).

5. Ensemble de régulation de traction selon l'une quelconque des revendications précédentes, comprenant en outre des moyens de détection de glissement (15), qui sont connectés de manière fonctionnelle et électrique à ladite unité de commande (12) et adaptés pour détecter, en fonctionnement, un glissement d'une ou de toutes les roues (3) dudit véhicule (1).

6. Ensemble de régulation de traction selon la Revendication 2 ou l'une quelconque des revendications 3 à 5 en cas d'interdépendance avec la Revendication 2, dans lequel lorsque ledit véhicule de travail (1) se déplace, en fonctionnement, dans ladite direction d'avancement (F), ladite unité de commande (12) est programmée pour contrôler lesdits moyens d'entraînement (5) afin de relever lesdits outils si ladite force de traction augmente continuellement, en fonctionnement, pendant une période de temps supérieure à une première période de temps seuil et d'abaisser lesdits outils si ladite force de traction décroît continuellement, en fonctionnement, pendant une période de temps plus longue qu'une deuxième période de temps seuil ; et
dans lequel lorsque ledit véhicule de travail (1) se déplace, en fonctionnement, dans ladite direction inverse (R), ladite unité de commande (12) est programmée pour contrôler lesdits moyens d'entraînement (5) afin d'abaisser lesdits outils si ladite force de traction augmente continuellement, en fonctionnement, pendant une période de temps supérieure à une troisième période de temps seuil et de relever lesdits outils si ladite force de traction décroît continuellement, en fonctionnement, pendant une période de temps supérieure à une quatrième période de temps seuil.

7. Ensemble de régulation de traction selon la Revendication 2 ou l'une quelconque des revendications 3 à 5 en cas d'interdépendance avec la Revendication 2 ou la Revendication 6, dans lequel lorsque ledit véhicule de travail (1) se déplace, en fonctionnement, dans ladite direction d'avancement (F), ladite unité de commande (12) est programmée pour contrôler lesdits moyens d'entraînement (5) afin de relever lesdits outils si ladite force de traction augmente, en fonctionnement, et est supérieure, en fonctionnement, à une troisième valeur seuil de ladite force de traction et d'abaisser lesdits outils si ladite force de traction décroît, en fonctionnement, et est inférieure à une quatrième valeur seuil de ladite force de traction ; et
dans lequel, lorsque ledit véhicule de travail (1) se déplace, en fonctionnement, dans ladite direction inverse (F), ladite unité de commande (12) est programmée pour contrôler lesdits moyens d'entraînement (5) afin d'abaisser lesdits outils si ladite force de traction augmente, en fonctionnement, et est supérieure, en fonctionnement, à une cinquième valeur seuil de ladite force de traction et de relever lesdits outils si ladite force de traction décroît, en fonctionnement, et est inférieure, en fonctionnement, à une sixième valeur seuil de ladite force de traction.

8. Un véhicule de travail, qui est adapté pour être couplé à un ou plusieurs outils ; ledit véhicule de travail (1) comprenant :
- un corps principal (2) ;
- une pluralité de roues (3), qui sont adaptées pour déplacer ledit corps principal (2) par rapport au sol dans une direction d'avancement (F) ou une direction inverse (A) ;
- des moyens d'entraînement (5) adaptés pour relever et abaisser lesdits outils couplés audit véhicule de travail (1) par rapport au sol ; et
- un ensemble de régulation de traction (10) selon l'une quelconque des revendications précédentes, qui est connecté de manière électrique et fonctionnelle auxdits moyens d'entraînement (5).

9. Procédé de régulation de traction pour un véhicule de travail (1) ; ledit véhicule de travail (1) étant adapté pour être couplé à un ou plusieurs outils et comprenant des moyens d'entraînement (5) adaptés pour relever et abaisser lesdits outils par rapport au sol ; ledit procédé comprenant les étapes consistant à :
i) sélectionner si ledit véhicule de travail (1) se déplace dans une direction d'avancement (F) ou dans une direction inverse (R) à l'aide des moyens de sélection (13) dudit véhicule de travail (1) ;
ii) détecter une force de traction exercée par ledit véhicule de travail (1) à l'aide des moyens de détection (11) dudit véhicule de travail (1) ;
iii) contrôler à l'aide d'une unité de commande (12) dudit véhicule de travail (1) lesdits moyens d'entraînement (5) afin de relever lesdits outils si ladite force de traction détectée à l'étape ii) est supérieure à une première valeur seuil (DI) et d'abaisser lesdits outils si ladite force de traction est inférieure à ladite première valeur seuil (DI), mais supérieure à une deuxième valeur seuil (D2) lorsque ledit véhicule de travail (1) se déplace dans ladite direction d'avancement (F) ;
iv) contrôler à l'aide de ladite unité de commande (12) lesdits moyens d'entraînement (5) afin d'abaisser lesdits outils si ladite force de traction détectée à l'étape ii) est supérieure à ladite deuxième valeur seuil (D2), mais inférieure à ladite première valeur seuil (DI) et de relever lesdits outils si ladite force de traction est inférieure à ladite deuxième valeur seuil (D2) lorsque ledit véhicule de travail (1) se déplace dans ladite direction inverse (R) ; ladite deuxième valeur seuil (D2) étant inférieure à ladite première valeur seuil (DI).

10. Procédé de régulation de traction pour un véhicule de travail (1) ; ledit véhicule de travail (1) étant adapté pour être couplé à un ou plusieurs outils et comprenant des moyens d'entraînement (5) adaptés pour relever et abaisser lesdits outils par rapport au sol ; ledit procédé comprenant les étapes consistant à :
v) sélectionner si ledit véhicule de travail (1) se déplace dans une direction d'avancement (F) ou dans une direction inverse (R) à l'aide des moyens de sélection (13) dudit véhicule de travail (1) ;
vi) détecter une force de traction exercée par ledit véhicule de travail (1) à l'aide des moyens de détection (11) dudit véhicule de travail (1) ;
vii) contrôler à l'aide d'une unité de commande (12) dudit véhicule de travail (1) lesdits moyens d'entraînement (5) afin de relever lesdits outils si ladite force de traction détectée à l'étape vi) augmente et d'abaisser lesdits outils si ladite force de traction décroît lorsque ledit véhicule de travail (1) se déplace dans la direction d'avancement (F) ;
viii) contrôler à l'aide d'une unité de commande (12) dudit véhicule de travail (1) lesdits moyens d'entraînement (5) afin de relever lesdits outils si ladite force de traction détectée à l'étape vi) décroît et d'abaisser lesdits outils si ladite force de traction augmente lorsque ledit véhicule de travail (1) se déplace dans la direction inverse (R).

11. Procédé de régulation de traction selon la Revendication 9 ou la Revendication 10, dans lequel ladite étape ii) ou ladite étape v) comprend l'étape ix) consistant à sélectionner manuellement si ledit véhicule de travail (1) se déplace dans ladite direction d'avancement (F) ou dans ladite direction inverse (R) à l'aide desdits moyens de sélection (13).

12. Procédé de régulation de traction selon les revendications 9 à 11, dans lequel ladite étape ii) ou ladite étape v) comprend l'étape x) consistant à détecter si ledit véhicule de travail (1) se déplace dans ladite direction d'avancement (F) ou dans ladite direction inverse (R) à l'aide desdits moyens de détection de direction (14) desdits moyens de sélection (13).

13. Procédé de régulation de traction selon l'une quelconque des revendications 9 à 12, comprenant les étapes supplémentaires consistant xi) à détecter un glissement d'une ou de toutes les roues (3) dudit véhicule de travail (1) à l'aide des moyens de détection de glissement (15) dudit véhicule de travail (1) ;
xii) à contrôler à l'aide d'une unité de commande (12) dudit véhicule de travail (1) lesdits moyens d'entraînement (5) afin de relever lesdits outils si le glissement détecté à l'étape xi) est supérieur au seuil de glissement.

14. Procédé de régulation de traction selon la Revendication 10 ou l'une quelconque des revendications 11 à 13 en cas d'interdépendance avec la Revendication 10, dans lequel ladite étape vii) comprend l'étape xiii) consistant à contrôler à l'aide de ladite unité de commande (12) lesdits moyens d'entraînement (5) afin de relever lesdits outils si ladite force de traction augmente continuellement pendant une période de temps supérieure à une première période de temps seuil et d'abaisser lesdits outils si ladite force de traction décroît continuellement pendant une période de temps supérieure à une deuxième période de temps seuil ; et
dans lequel ladite étape viii) comprend l'étape xiv) consistant à contrôler à l'aide de ladite unité de commande (12) lesdits moyens d'entraînement (5) afin d'abaisser lesdits outils si ladite force de traction augmente continuellement pendant une période de temps supérieure à une troisième période de temps seuil et de relever lesdits outils si ladite force de traction décroît continuellement, en fonctionnement, pendant une période de temps supérieure à une quatrième période de temps seuil.

15. Procédé de régulation de traction selon la Revendication 10 ou l'une quelconque des revendications 11 à 13 en cas d'interdépendance avec la Revendication 10 ou la Revendication 14, dans lequel ladite étape vii) comprend l'étape xv) consistant à contrôler à l'aide de ladite unité de commande (12) lesdits moyens d'entraînement (5) afin de relever lesdits outils si ladite force de traction augmente et est supérieure à une troisième valeur seuil de ladite force de traction et d'abaisser lesdits outils si ladite force de traction décroît, en fonctionnement, et est inférieure à une quatrième valeur seuil de ladite force de traction ; et
dans lequel ladite étape viii) comprend l'étape xvi) consistant à contrôler à l'aide de ladite unité de commande (12) lesdits moyens d'entraînement (5) afin d'abaisser lesdits outils si ladite force de traction augmente et est supérieure à une cinquième valeur seuil de ladite force de traction et de relever lesdits outils si ladite force de traction décroît et est inférieure à une sixième valeur seuil de ladite force de traction.
